# EUROPEAN PATENT APPLICATION

(11) **EP 4 053 781 A1**
(43) Date of publication of application: **07.09.2022**
(21) Application number: 20882678.4
(22) Date of filing: 21.10.2020
(51) Int. Cl.: G06Q 50/10, G06F 16/9535

(54) **ARTIFICIAL INTELLIGENCE-BASED EXPLICIT CONTENT BLOCKING DEVICE**

(30) Priority: 31.10.2019 KR 20190137364
(71) Applicant: Kim, Min Suk, Seogwipo-si, Jeju-do 63506 (KR)
(72) Inventor: Kim, Min Suk, Seogwipo-si, Jeju-do 63506 (KR)
(74) Representative: M. Zardi & Co S.A.
(86) International application number: PCT/KR2020/014382
(87) International publication number: WO 2021/085921

(57) **Abstract**

The present invention relates to an artificial intelligence-based explicit content blocking device comprising: a library server including a harmfulness determination unit having a list of harmful URLs and a plurality of harmfulness determination model files, and a user terminal that downloads the list of harmful URLs and at least one of the harmfulness determination model files from the harmfulness determination unit of the library server, requests and executes contents, wherein the user terminal inspects whether the content is registered as the harmful URLs based on the list of the harmful URLs downloaded from the library server, and if the content is not registered as the harmful URLs, the user terminal determines whether the content is harmful based on the harmfulness determination model files downloaded from the library server.

## Description

### FIELD OF THE INVENTION

The present invention relates to an artificial intelligence-based explicit content blocking technology, and more particularly, to an artificial intelligence-based explicit content blocking device that can provide safe content that meets user needs by quickly and accurately inspecting harmful content among various content posted on the Internet.

### BACKGROUND OF THE INVENTION

As the Internet is actively used, and frequency and ability of Internet use of most users increase, the possibility of exposure to harmful contents through the Internet is increasing.

In general, harmful contents include adult material depicting sexual activity and violent material with intense violence. These harmful contents can be easily used by anyone, regardless of age or gender, if adult authentication is performed through the Internet. Even if there are systems that prevent minors to access these harmful contents through adult authentication, adult authentication can be easily performed using information of parents or other adults.

Recently, harmful contents are being exposed indiscriminately to various age groups through various media. In particular, it is a very worrisome situation as harmful content is being shown even to children who lack discernment.

Accordingly, in recent years, technologies capable of automatically analyzing and blocking harmful content has been developed. For example, there are URI (Uniform Resource Identifier) or blocking based on network address, blocking using pornography information DB, detection through text analysis, and detection through image analysis.

However, there is a problem in that the existing harmful content inspection and blocking method does not reflect the user's needs, and determines the harmful content based on a uniform standard and unconditionally blocks it.

### [Prior Art Document]

### [Patent Document]

1 Korean Patent No. 10-1027617 (2011.03.30)
2Korea Patent Publication No. 10-2014-0025113 (2014.03.04)

### DETAILED DESCRITION OF THE INVENTION

### TECHNICAL PROBLEMS

One embodiment of the present invention provides an artificial intelligence-based explicit content blocking device capable of providing safe content that meets user needs by quickly and accurately inspecting explicit content among various content posted on the Internet.

Another embodiment of the present invention provides an artificial intelligence-based explicit content blocking device capable of inspecting harmful content by configuring a local DB in which a list of harmful URLs is stored and comparing content with the list of harmful URLs stored in the local DB in an offline state in real time.

Another embodiment of the present invention provides an artificial intelligence-based explicit content blocking device capable of reducing inspection time and blocking certain content in a customized manner according to individual preferences by configuring a harmfulness determination model into model files subdivided by category to perform a selective inspection based on user standards.

### SUMMARY OF THE INVENTION

According to an embodiment of the present invention, the artificial intelligence-based explicit content blocking device comprising: a library server including a harmfulness determination unit having a list of harmful URLs and a plurality of harmfulness determination model files, and a user terminal that downloads the list of harmful URLs and at least one of the harmfulness determination model files from the harmfulness determination unit of the library server, requests and executes contents, wherein the user terminal inspects whether the content is registered as the harmful URLs based on the list of the harmful URLs downloaded from the library server, and if the content is not registered as the harmful URLs, the user terminal determines whether the content is harmful based on the harmfulness determination model files downloaded from the library server.

The user terminal may include: a content receiving unit receiving the content requested by a user; a harmfulness determination unit including a local DB storing the list of harmful URLs and a local library storing the harmfulness determination model files and determining whether the content received through the content receiving unit is harmful, and a content display unit displaying content that satisfies harmfulness determination standard among the content received through the content receiving unit.

The harmfulness determination unit may store URLs of harmful contents including user standard in the list of harmful URLs provided from the library server to configure a local DB with a personalized list of harmful URLs.

The harmfulness determination unit may compare a URL of the content requested by the user with the list of harmful URLs stored in the local DB to inspect whether the URL of the content is registered as the harmful URLs, and if the URL of the content is registered as the harmful URLs, the harmfulness determination unit may display an inspection result through the content display unit, and block the content or display substitute content requested by the user.

If the URL of the content is not registered as the harmful URLs, the harmfulness determination unit may inspect whether the content is harmful by using the harmfulness determination model files stored in the local library and prevent errors through multifaceted verification.

The local library may be configured with a plurality of harmfulness determination model files subdivided by category that is provided from the library server, by real-time update or in response to a user request, and any one harmfulness determination model file selected by the user among the harmfulness determination model files may be set as a basic model.

The harmfulness determination unit may inspect harmfulness determination of adult and pornography category by default and verify the harmfulness determination by adding an inspection according to a setting value and category selected by the user and a tag and character string inspection.

If the content is not registered as the harmful URL, the content receiving unit may load the content and display images or advertising images through the content display unit during the loading of the content, and if the content is determined as harmful content, the harmfulness determination unit may register a URL of the content as a harmful URL in the local DB, and the content display unit may purify text, image, or video of the harmful content to another text, image, or video and display the purified text, image, or video according to a user setting.

### TECHNICAL EFFECTS OF THE INVENTION

The disclosed technology may have the following effects. However, it does not mean that a specific embodiment should include all of the following effects or only the following effects, and the scope of the disclosed technology should not be understood as being limited thereby.

The artificial intelligence-based explicit content blocking device according to an embodiment of the present invention can quickly and accurately inspect harmful content among various content posted on the Internet by using artificial intelligence and can provide safe content that meets user needs.

The artificial intelligence-based explicit content blocking device according to an embodiment of the present invention is configured with a list of harmful URLs stored in a local DB and thus can inspect harmful contents through comparison content with the local DB in which the list of harmful URLs is stored in real time in an offline state as well as online and minimize inspection errors through a multifaceted verification process.

The artificial intelligence-based explicit content blocking device according to an embodiment of the present invention is configured with model files subdivided by category as a harmfulness determination model to perform a selective inspection based on user standards and thus can reduce inspection time, block content, and replace the content with purified content that meets characteristics of user or standards of an administrator.

### BRIEF DESCRIPTION OF THE DRAWINGS

FIG. 1 is a block diagram schematically illustrating an artificial intelligence-based explicit content blocking device according to an embodiment of the present invention.
FIG. 2 is a block diagram illustrating a basic configuration of an artificial intelligence-based explicit content blocking device according to an embodiment of the present invention.
FIG. 3 is a block diagram illustrating a configuration of a user terminal of an artificial intelligence-based explicit content blocking device according to an embodiment of the present invention.
FIG. 4 is a block diagram illustrating a configuration of a library server of an artificial intelligence-based explicit content blocking device according to an embodiment of the present invention.
FIGs. 5 and 6 are flowcharts illustrating an operation process of an artificial intelligence-based explicit content blocking device according to an embodiment of the present invention.

### BEST MODE FOR THE INVENTION

Since description of the present invention is merely an embodiment for structural or functional explanation, the scope of the present invention should not be interpreted as being limited by the embodiment described in the description below. That is, since the embodiment can be variously modified and may have various forms, it should be understood that the scope of the present invention includes equivalents that can embody the technical idea of the present invention. In addition, since the object or effect presented in the present invention does not mean that a specific embodiment should include all of them or only such effects, it should not be understood that the scope of the present invention is limited thereby.

Meanwhile, meaning of terms described in the present application should be understood as follows.

Terms such as "first" and "second" are for distinguishing one component from another, and the scope of the present invention should not be limited by these terms. For example, a first component may be termed a second component, and similarly, a second component may also be termed a first component.

When a component is referred to as "connected" to another component, it may be directly connected to the other component, but it should be understood that another component may exist therebetween. On the other hand, when it is mentioned that a certain component is "directly connected" to another component, it should be understood that another element does not exist therebetween. Meanwhile, other descriptions describing relationship between components, such as "between" and "directly between," " adjacent to" and "directly adjacent to," and the like, should be interpreted similarly.

The singular form should be understood as including the plural form unless clearly stated otherwise. In addition, terms such as "comprise" or "have" are intended to indicate an existence of embodied feature, number, step, operation, component, part, or a combination thereof, and it should be understood that it does not preclude a possibility of existence or addition of one or more other features, numbers, steps, operations, components, parts, or combinations thereof.

In each step, reference numbers, such as a, b, c, and the like, are used for convenience of description. The reference numbers do not describe an order of each step, and each step may occur in a different order from the specified order unless a specific other order is clearly specified. That is, each step may occur in the same order as specified, may be performed substantially simultaneously, or may be performed in a reverse order.

The present invention may be embodied as computer-readable codes on a computer-readable recording medium, and the computer-readable recording medium includes all types of recording devices in which data readable by a computer system is stored. Examples of the computer-readable recording medium include ROM, RAM, CD-ROM, magnetic tape, floppy disk, optical data storage device, and the like. In addition, the computer-readable recording medium may be distributed in a network connected computer system, and the computer-readable codes may be stored and executed in a distributed manner.

All terms used herein have the same meaning as commonly understood by one of ordinary skill in the art to which the present invention belongs unless otherwise defined. Terms defined in the dictionary should be interpreted as being consistent with meaning of context of related arts and cannot be interpreted as having an ideal or excessively formal meaning unless explicitly defined in the present application.

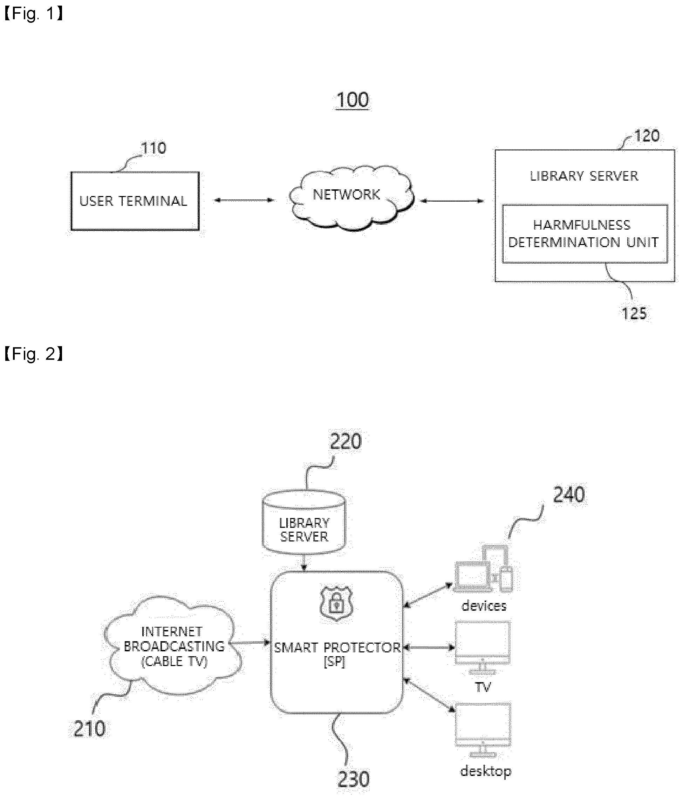

FIG. 1 is a block diagram schematically illustrating an artificial intelligence-based explicit content blocking device according to an embodiment of the present invention.

Referring to FIG. 1, the artificial intelligence-based explicit content blocking device 100 includes a user terminal 110 and a library server 120.

First, the user terminal 110 is a computing device connected to the library server 120 through a wired and wireless network and for example, may be embodied as a desktop, a laptop, a tablet PC, or a smartphone. A user can subscribe to various contents such as new posts, images, or videos uploaded to an online bulletin board, through the user terminal 110.

The library server 120 includes a harmfulness determination unit 125 conducting a URL inspection and determining whether content is harmful when the content is requested by the user terminal 110. The harmfulness determination unit 125 has a list of harmful URLs and a number of harmfulness determination model files. The harmfulness determination unit 125 delivers a list of harmful URLs and a plurality of harmfulness determination model files to the user terminal 110 and determines harmfulness of subscription content of the user terminal 110 in real time.

FIG. 2 is a block diagram illustrating a basic configuration of an artificial intelligence-based explicit content blocking device according to an embodiment of the present invention.

Referring to FIG. 2, content 210 such as the Internet, broadcasting, and cable TV is input to a smart protector 230, and the smart protector 230 determines whether the input content is harmful through a harmfulness determination program delivered from the library server 220. As a result of the harmfulness determination, only the content that is determined to be not harmful is output through a number of terminals 240. The smart protector 230 is installed and operated in each of a plurality of terminals 240, which include computers or various devices.

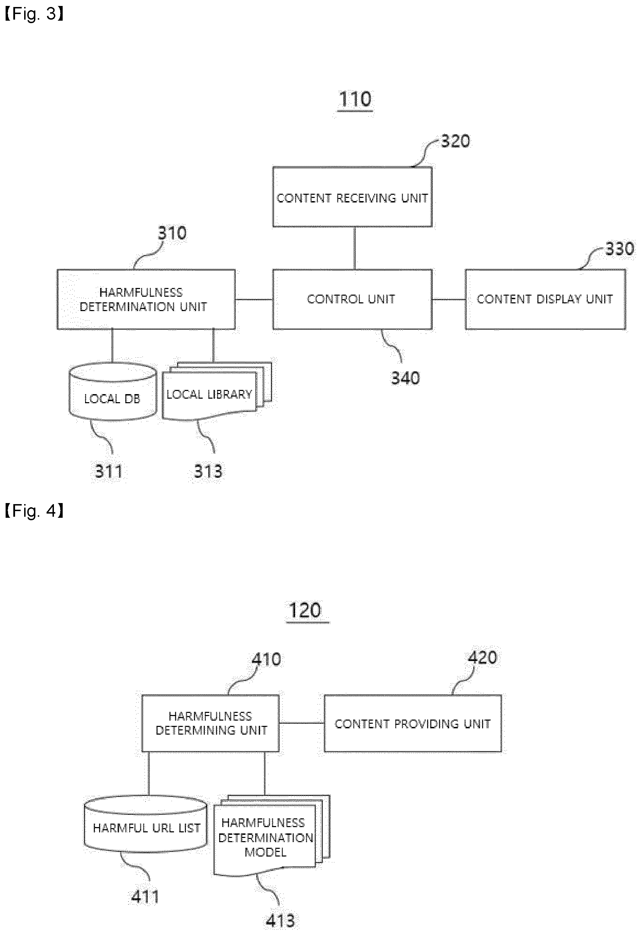

FIG. 3 is a block diagram illustrating a configuration of a user terminal of an artificial intelligence-based explicit content blocking device according to an embodiment of the present invention.

Referring to FIG. 3, the user terminal 110 includes a harmfulness determination unit 310, a content receiving unit 320, a content display unit 330, and a control unit 340.

The harmfulness determination unit 310 stores the harmfulness determination program downloaded from the library server 120. Programs for determining harmfulness can be made in various forms, such as plugin, extension, class, and independent program that include an artificial intelligence function. The harmfulness determination unit 310 may include a local DB 311 in which a list of harmful URLs is stored and a local library 313 in which one or more harmfulness determination model files are stored.

In one embodiment, the local DB 311 may receive the harmful URL list from the library server 120 and store them upon initial installation of the harmfulness determination program or according to a request of the user. In this case, the local DB 311 may store a user customized harmful URL list including a website address where harmful content is found, based on the user's visit record, along with the specified harmful URL list. Accordingly, network resources through network transmission of the harmful URL list can be reduced, and load and capacity of the library server 120 can be reduced. In addition, the harmful URL list can be prevented from being shared in reverse.

In one embodiment, the local library 313 may receive modularized harmfulness determination model files for each harmful category from the library server 120 and store them. In this case, the local library 313 may update the harmfulness determination model files for each category in real time or according to a request of the user.

The content receiving unit 320 may receive the content requested by the user from the library server 120. In this case, the harmfulness determining unit 310 may inspect a URL of the website from which the user requested the content based on the harmful URL list stored in the local DB 311. The content receiving unit 320 may receive the content when the website is not registered as the harmful URL.

The content display unit 330 may provide continuous service such as text, image, advertisement, and video that can attract interest of the user so that the user does not feel bored while receiving the content through the content receiving unit 320 and inspecting harmfulness of the received content. The content display unit 330 may display the content that passes the user's harmfulness determination standard on a screen so that the user can subscribe. In this case, the harmfulness determination unit 310 may determine whether the content is harmful according to the user's standard based on the harmfulness determination model files for each category stored in the local library 313. The content display unit 330 may normally display the content that passes the user's harmfulness determination standard and may change the content that does not pass the user's harmfulness determination standard to other content and display the changed content. For example, the content may be displayed through a process such as changing a prohibited term to a purified term, blurring a harmful image, or the like.

The control unit 340 may control overall operations of the harmfulness determination unit 310, the content receiving unit 320, and the content display unit 330 and manage control and data flow between them, so that the user terminal 110 utilizes artificial intelligence to receive user requested content among various contents posted on the Internet, inspect harmfulness, and display safe content that meet the user's needs,

FIG. 4 is a block diagram illustrating a configuration of a library server of an artificial intelligence-based explicit content blocking device according to an embodiment of the present invention.

Referring to FIG. 4, the library server 120 includes a harmfulness determining unit 410 and a content providing unit 420.

The harmfulness determination unit 410 may have a harmful URL list 411 and a plurality of harmfulness determination model files 413. When receiving a request for content from the user terminal 110, the harmfulness determination unit 410 may determine whether the requested content is harmful in an online state. In one embodiment, the harmful URL list 411 may store a list of harmful website addresses provided by the Korea Communications Standards Commission. A plurality of harmfulness determination model files 413 may be provided by being classified by category. For example, the plurality of harmfulness determination model files may be divided into various categories such as adult, violence, gambling, horror, personally disliked animals, and hatred. By dividing the harmfulness determination model files 413 by category and modularizing them, a model for each use and each company can be easily built. In addition, since the plurality of harmfulness determination model files 413 can be respectively downloaded and determined, download time can be reduced. In addition, since categories that harmfulness determination is not required according to individual settings do not need to be determined, inspection time of content requested from the user terminal 110 can be reduced.

In addition, in the library server 120, any one harmfulness determination model file 413 selected from among the plurality of harmfulness determination model files 413 is set as a basic model, and the harmfulness determination model file 413 set as the basic model can be used to proceed an inspection without separately downloading it. In addition, the harmfulness determination model file 413 set as the basic model can be used to proceed an inspection in both an offline state and an online state.

The content providing unit 420 may provide both the content that passes the harmfulness determination standard and the content that does not pass the harmfulness determination standard, to the user.

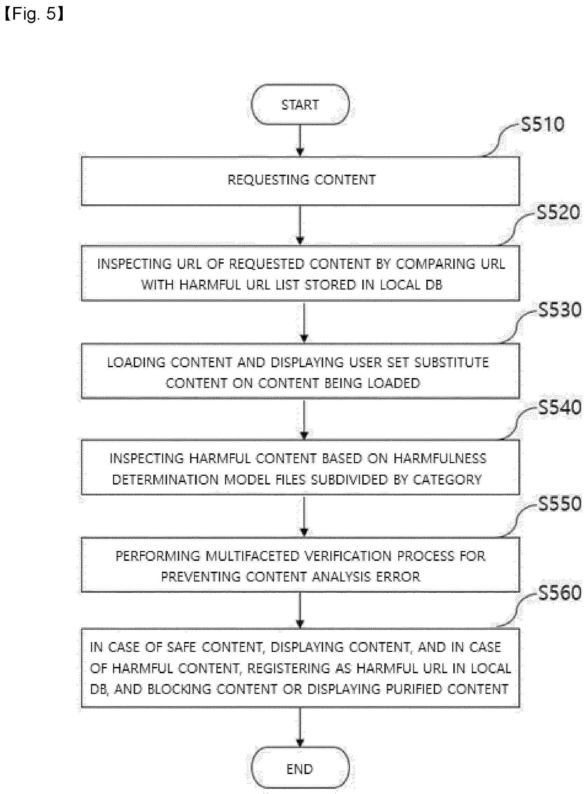

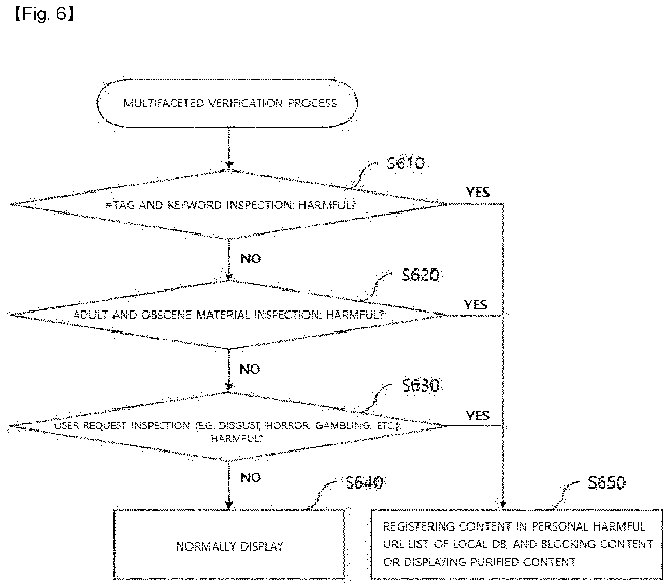

FIGs. 5 and 6 are flowcharts illustrating an operation process of an artificial intelligence-based explicit content blocking device according to an embodiment of the present invention.

Referring to FIG. 5, a harmful content inspection process according to a content request from the user terminal 110 is illustrated.

First, the user may request content from the library server 120 through the user terminal 110, step S510. In one embodiment, the user terminal 110 may request desired content through a web browser, an app, an loT device, or the like. In this case, requestable content may include various forms such as website, image, video, smartphone text message, and the like. When the user terminal 110 requests the content, the harmfulness determination program may be downloaded to the user terminal 110 through the library server 120. In addition, the list of harmful URLs and harmfulness determination model files for each category may be downloaded. In this case, download time can be reduced by downloading only a desired category among the plurality of harmfulness determination model files subdivided for each category.

The Internet-based explicit content blocking device 100 may preferentially perform a URL inspection on content requested by the user and determine whether a URL of the requested content is registered as the harmful URL, step S520. In one embodiment, the user terminal 110 may perform a URL inspection in real time in an offline state by comparing the URL of the requested content with the harmful URL list stored in the local DB 311 through the harmfulness determination unit 310. In this case, since the local DB 311 stores a public harmful URL list provided from the library server 120 and a personal harmful URL list registered based on the user's personal preference together, the harmfulness determination unit 310 can perform an URL inspection that satisfies the user's standard. Of course, the user terminal 110 may conduct a URL inspection in real time in an online state by comparing the requested content with the harmful URL list 411 through the harmfulness determination unit 410 of the library server 120. As a result of the URL inspection, if the requested content is registered as the harmful URL, the result may be displayed on the user terminal 110. In this case, content displayed on the user terminal 110 may be different for user setting and classification, such as corporate use, free, OEM, and others, of the harmfulness determination program. For example, if the harmfulness determination program is for personal use, the user's requested content may be blocked and the user may move to a safe website, and if the harmfulness determination program is for corporate use, content requested by a corporate client may be displayed instead.

If a URL of the requested content is not registered as the harmful URL as a result of the URL inspection, the Internet-based explicit content blocking device 100 may load the requested content and at the same time, display user set substitute content on the content being loaded so that the user may not feel bored during the loading, step S530. In one embodiment, the user terminal 110 may display image, animation, guide, advertisement video, and the like in the process of loading content from the library server 120, according to a user setting or a request of a company so that the user does not feel bored.

The Internet-based harmful content blocking apparatus 100 may proceed to determine whether the requested content is harmful in real time prior to outputting the content to the screen of the user terminal 110 at the same time the content is being loaded, step S540. In one embodiment, the user terminal 110 may conduct a harmful content inspection in real time in an offline state based on the harmfulness determination model files for each category stored in the local library 313 through the harmfulness determination unit 310. In this case, as the local library 313 is configured with the harmfulness determination model files subdivided by category, the harmfulness determination unit 310 can select a category of the harmfulness determination model files by each individual or by an administrator setting to determine harmfulness, thereby reducing inspection time of content. Of course, the user terminal 110 may conduct a harmful content inspection in real time in an online state based on the harmfulness determination model 413 through the harmfulness determination unit 410 of the library server 120.

The Internet-based explicit content blocking device 100 may perform a multifaceted verification process for preventing content analysis errors step S550. In this case, the multifaceted verification process may perform multifaceted inspections, such as character string inspection, adult pornography inspection, and user set harmful material inspection, and the like, to prevent errors in an image recognition method, using artificial intelligence.

If the requested content is determined to be safe, the Internet-based explicit content blocking device 100 may normally display the content on the screen of the user terminal 110, and if the requested content is determined to be harmful, the device 100 may register a URL of the requested content as a harmful URL in the local DB 311. In addition, after registering as a harmful URL, the device 100 may replace a part of the content that does not meet the standard with purified content and display the purified content on the screen of the user terminal 110, or screen or completely block the part step S560.

Referring to FIG. 6, it is an exemplary diagram illustrating the multifaceted verification process.

The artificial intelligence-based explicit content blocking device 100 may perform a multifaceted inspection to prevent errors when recognizing or perceiving image included in content based on artificial intelligence. For example, a situation in which scattered ketchup is mistakenly recognized as blood may occur. To prevent these errors, a tag inspection and a character string inspection, such as keyword, may be performed step S610. That is, errors in image inspection based on artificial intelligence can be reduced by detecting harmfulness in the tag and keyword inspection.

If no harmfulness is found in the tag and keyword inspection, adult and obscene material inspection may be performed step S620. In this case, adult and obscene material inspection may be performed by default, and in the case of adult may obscene material, only an authority administrator may set whether to display it.

If no harmfulness is found in the adult and obscene inspection, an inspection according to the user's request may be performed step S630. For example, the user may select harmful material such as disgust, horror, and gambling, and others according to a personal preference, and in this case, a reference value may be variably set for the selected harmful material. In this case, the inspection may be performed according to the harmful material and the setting reference value selected by the user. For example, it can be set that the user clearly feels disgust when a degree of disgust is 90% or more and feels disgust when a degree of disgust is 70% or more. If the requested content satisfies the harmful material standard and the setting reference value selected by the user, it can be determined as being harmful.

If no harmfulness is found through the multifaceted verification process, the content requested by the user may be normally displayed on the user terminal 110, step S640.

If harmfulness is found during the multifaceted verification process, a URL of the requested content may be registered in the personal harmful URL list of the local DB 311, and the requested content may be completely blocked or displayed purified contents step S650.

As described above, harmful content can be inspected and blocked in real time in an offline state through the user terminal, and other content can be provided during the inspection process to prevent the user from feeling bored.

In addition, by configuring the harmful URL list as the local DB, network resources through network transmission of the harmful URL list can be reduced, and the load and capacity of the library server can be reduced. In addition, the harmful URL list can be prevented from being shared in reverse.

Furthermore, by classifying and applying the harmfulness determination standard into various categories and enabling to apply the standard according to individual preferences, the classified categories can be used individually or integrally. Accordingly, the download time of the harmfulness determination model file can be reduced, and the inspection speed can be improved.

Moreover, through the multifaceted verification process, content analysis errors can be prevented, and safe content that meets the user's needs can be displayed.

Although the above has been described with reference to the preferred embodiments of the present invention, one of skilled in the art can variously modify and change the present invention within the scope without departing from the spirit and scope of the present invention as described in the claims below.

### ] [Description of Reference Number]

100: Artificial Intelligence-based explicit content blocking device
110: user terminal
120, 220: library server
125,310,410: harmfulness determination unit
210: content 230: smart protector
240: terminal
311: local DB 313: local library
320: content receiving unit 330: content display unit
340: control unit
411: harmful URL list 413: harmfulness determination model file
420: content providing unit

## Claims

1. An artificial intelligence-based explicit content blocking device comprising:
a library server including a harmfulness determination unit having a list of harmful URLs and a plurality of harmfulness determination model files, and
a user terminal that downloads the list of harmful URLs and at least one of the harmfulness determination model files from the harmfulness determination unit of the library server, and requests and executes contents,
wherein the user terminal inspects whether the content is registered as the harmful URLs based on the list of the harmful URLs downloaded from the library server, and if the content is not registered as the harmful URLs, the user terminal determines whether the content is harmful based on the harmfulness determination model files downloaded from the library server.

2. The artificial intelligence-based explicit content blocking device of claim 1, wherein the user terminal includes:
a content receiving unit receiving the content requested by a user;
a harmfulness determination unit including a local DB storing the list of harmful URLs and a local library storing the harmfulness determination model files and determining whether the content received through the content receiving unit is harmful, and
a content display unit displaying content that satisfies harmfulness determination standard among the content received through the content receiving unit.

3. The artificial intelligence-based explicit content blocking device of claim 2, wherein the harmfulness determination unit of the user terminal stores URLs of harmful contents including user standard in the list of harmful URLs provided from the library server to configure a local DB with a personalized list of harmful URLs.

4. The artificial intelligence-based explicit content blocking device of claim 3, wherein the harmfulness determination unit of the user terminal compares a URL of the content requested by the user with the list of harmful URLs stored in the local DB to inspect whether the URL of the content is registered as the harmful URLs, and if the URL of the content is registered as the harmful URLs, the harmfulness determination unit of the user terminal displays an inspection result through the content display unit, and blocks the content or display substitute content requested by the user.

5. The artificial intelligence-based explicit content blocking device of claim 4, wherein if the URL of the content is not registered as the harmful URLs, the harmfulness determination unit of the user terminal inspects whether the content is harmful by using the harmfulness determination model files stored in the local library and prevents errors through multifaceted verification.

6. The artificial intelligence-based explicit content blocking device of claim 5, wherein the local library is configured with a plurality of harmfulness determination model files subdivided by category that is provided from the library server, by real-time update or in response to a user request, and any one harmfulness determination model file selected by the user among the harmfulness determination model files is set as a basic model.

7. The artificial intelligence-based explicit content blocking device of claim 5, wherein the harmfulness determination unit of the user terminal inspects harmfulness determination of adult and pornography category by default and verifies the harmfulness determination by adding an inspection according to a setting value and category selected by the user and a tag and character string inspection.

8. The artificial intelligence-based explicit content blocking device of claim 5, wherein if the content is not registered as the harmful URL, the content receiving unit loads the content and displays images or advertising images through the content display unit during the loading of the content, and if the content is determined as harmful content, the harmfulness determination unit of the user terminal registers a URL of the content as a harmful URL in the local DB, and the content display unit purifies text, image, or video of the harmful content9 to another text, image, or video and displays the purified text, image, or video according to a user setting.
